Europäisches Patentamt

European Patent Office

Office européen des brevets

(19)

(11) Veröffentlichungsnummer: **0 184 836**
**A2**

# (12) EUROPÄISCHE PATENTANMELDUNG

(21) Anmeldenummer: **85115793.3**

(22) Anmeldetag: **11.12.85**

(51) Int. Cl.⁴: **G 01 M 3/28**

(30) Priorität: **12.12.84 DE 3445281**

(43) Veröffentlichungstag der Anmeldung: **18.06.86**
**Patentblatt 86/25**

(84) Benannte Vertragsstaaten: **DE FR GB IT**

(71) Anmelder: **Klöckner-Humboldt-Deutz**
**Aktiengesellschaft,**
**Deutz-Mülheimer-Strasse 111 Postfach 80 05 09,**
**D-5000 Köln 80 (DE)**

(72) Erfinder: **Seiche, Manfred, An der Ölmühle 36,**
**D-5000 Köln 80 (DE)**

(54) **Verfahren und Vorrichtung zur Dichtigkeitsprüfung zweier Absperrventile in einer gasdurchströmten Leitung.**

(57) Die Erfindung betrifft ein Verfahren zur Dichtigkeitsprüfung zweier Absperrventile in einer gasdurchströmten Leitung, wobei nach Absperren der Ventile V1 und V2 der Druck in dem Leitungsabschnitt 2 zwischen den Ventilen überwacht wird. Bei einem Druckabfall im Leitungsabschnitt 2 kann lediglich die Aussage getroffen werden, dass das Ventil V2 der gasabführenden Leitung 3 undicht ist. Eine Undichtigkeit des Ventils V1 in der gaszuführenden Leitung wird erfindungsgemäss dann festgestellt, wenn der Leitungsabschnitt zwischen den Ventilen V1 und V2 auf einen vorgebbaren Wert zwischen dem Druck in der gaszuführenden Leitung und dem Druck in der gasabführenden Leitung gesenkt wird. Steigt nach einem Absperren der Ventile der Druck im Leitungsabschnitt 2 über den vorgegebenen Druckwert an, dann liegt eine Undichtigkeit des Ventils der gaszuführenden Leitung 1 vor.

Klöckner-Humboldt-Deutz AG ⚡ **KHD**

5000 Köln 80, den 1. Dezember 1985
D 84/066 , AE-ZPB Wa/Hö

## Verfahren und Vorrichtung zur Dichtigkeitsprüfung zweier Absperrventile in einer gasdurchstömten Leitung

Die Erfindung betrifft ein Verfahren zur Dichtigkeitsprüfung zweier Absperrventile in einer gasdurchströmten Leitung gemäß Oberbegriff des Anspruchs 1 sowie eine Vorrichtung zur Durchführung des Verfahrens gemäß Oberbegriff des Anspruchs 6.

Bei mit Gas betriebenen Gasturbinen und Kesselanlagen sind zwei hintereinanderliegende Hauptventile mit Zwischenentlüftung vorgeschrieben. Zur Funktionsprüfung dieser Ventile ist es bekannt, bei abgesperrten Ventilen dem Druck in dem Leitungsabschnitt zwischen diesen Ventilen zu überwachen; bei einem Druckabfall kann auf eine Undichtigkeit des Ventils der gasabführenden Leitung geschlossen werden.

Eine Undichtigkeit des gaszuführenden Ventils kann auf diese Weise aber nicht festgestellt werden. Ferner kann der Fall eintreten, daß das Ventil der gaszuführenden Leitung ebenso undicht ist wie das Ventil der gasabführenden Leitung. Strömt dabei mehr Gas aus der gaszuführenden Leitung über das undichte Absperrventil in den Leitungsabschnitt ein als über das undichte Ventil der gasabführenden Leitung abströmen kann, so bleibt der Druck im Leitungsaschnitt konstant. Hieraus muß die Bedienungsperson den falschen Schluß ziehen, daß beide Absperrventile funktionssicher absperren, obwohl beide Ventile undicht sind.

TN 0103 0027'01
(F 360'1)
20 000 2.84 pg

Der Erfindung liegt die Aufgabe zugrunde, ein Verfahren zur Dichtigkeitsprüfung zweier Absperrventile in einer gasdruckströmten Leitung anzugeben, mit dem mit hoher Sicherheit Undichtigkeiten des einen oder anderen Absperrventils festgestellt werden kann.

Diese Aufgabe wird mit den kennzeichnenden Merkmalen des Anspruchs 1 gelöst. Dadurch, daß nach dem Absperren der Ventile der Druck in dem Leitungabschnitt zwischen den Ventilen auf einen vorgebbaren Druckwert zwischen dem Druck in der gaszuführenden Leitung und dem Druck in der gasabführenden Leitung gesenkt wird, kann sowohl eine Undichtkeit des Ventils der gaszuführenden Leitung wie eine Undichtigkeit des Ventils der gasabführenden Leitung festgestellt werden. Durch Überwachung des vorgegebenen Druckwerts kann eine Bedienungsperson sofort feststellen, ob das eine oder das andere Ventil undicht ist.

Um auf einfache Weise einen definierten vorgebbaren Druckwert einstellen zu können, wird vorgeschlagen, den Leitungsabschnitt zwischen den Ventilen zunächst zu entlüften und dann auf einen vorgebbaren Druckwert aus der gaszuführenden Leitung mit Gas zu beaufschlagen.

Vorteilhaft ist vorgesehen, bei Abfall des Drucks um einen Differenzdruck unter dem vorgebbaren Druckwert eine Leckanzeige für das Ventil der gasabführenden Leitung und bei Ansteigen des Drucks um einen Differenzdruck über den vorgebbaren Druckwert eine Leckanzeige für das Ventil der gaszuführenden Leitung anzusteuern. Auf diese Weise kann eine automatische Warneinrichtung geschaffen werden, die - z.B. optisch oder akustisch - den Betreiber vor undichten Absperrventilen warnt.

TN 0103 0027/01
(F 360/1)
20 000 2.84 pg

0184836

Klöckner-Humboldt-Deutz AG ⚊KHD

1.12.1985
D 84/066

Um eine erhöhte Sicherheit einer ordnungsgemäßen Funktion der Absperrventile zu erzielen, wird die Dichtigkeitsprüfung sowohl nach dem Absperren wie vor dem Öffnen der Ventile durchgeführt.

Eine vorteilhafte Vorrichtung zur Durchführung des Verfahrens ist in Anspruch 6 wiedergegeben. Mit dieser Vorrichtung ist mit wenigen zusätzlichen Teilen jede beliebige Armatur nachrüstbar, so daß das erfindungsgemäße Prüfverfahren auch bei bestehenden Armaturen durchgeführt werden kann.

Zweckmäßigerweise ist in der Gaszuführung ein Druckminderer angeordnet, durch den der vorgebbare Druckwert fest einstellbar ist. Um positive wie negative Druckschwankungen gleicher Höhe zulassen bzw. erfassen zu können, ist vorgeschlagen, den Druckminderer so auszulegen, daß der in der gaszuführenden Leitung anstehende Druck auf etwa die Hälft halbiert wird.

Weitere Merkmale der Erfindung ergeben sich aus den weiteren Ansprüchen, der Beschreibung und der Zeichnung, die ein Ausführungsbeispiel der Erfindung zeigt, das im folgenden näher beschrieben ist. Es zeigt:

Fig. 1 ein Schaltprinzip der erfindungsgemäßen Vorrichtung zur Dichtigkeitsprüfung zweier Absperrventile,

Fig. 2 einen Ablaufplan des erfindungsgemäßen Verfahrens zur Dichtigkeitsprüfung zweier Absperrventile,

Fig. 3 einen elektrischen Schaltplan zur Steuerung einer Leckanzeigevorrichtung.

TN 0103 0027/01
(F 360 1)
20 000 2 84 pg

Klöckner-Humboldt-Deutz AG △KHD

1.12.1985
D 84/066

Zwischen einer gaszuführenden Leitung 1 und einer gasabführenden Leitung 3 ist ein Leitungsabschnitt 2 angeordnet,
der über Ventile V1 und V2 druckdicht absperrbar ist. Die
Ventile sind pneumatisch gesteuert, wobei deren pneumatische Stellzylinder 4 und 5 über Magnetventile VM1 und
VM2 vom Druck des in der gaszuführenden Leitung 1 anstehenden Gases beaufschlagbar sind. Vor den elektrisch
ansteuerbaren Magnetenventilen VM1 und VM2 ist jeweils
eine Drossel 7 angeordnet, um einen sanften Druckaufbau in
den Stellzylindern 4 und 5 und damit ein weiches Öffnen
der Absperrventile V1 und V2 zu erzielen.

Die Magnetventile VM1 und VM2 sind so ausgebildet, daß in
deren geschlossenem Zustand die Arbeitsräume der pneumatischen Stellzylinder 4 und 5 über die Entlüftungsleitungen 6a und 6b mit einer Sammelentlüftungsleitung 20
verbunden sind. Auf diese Weise wird ein sicheres
Schließen der Ventile V1 und V2 erzielt.

Der Leitungsabschnitt 2 zwischen den Absperrventilen V1
und V2 ist über eine Entlüftungsleitung 6 und ein schaltbares Ventil VM3 ebenfalls mit der Sammelentlüftungsleitung 20 verbindbar.

Ferner steht der Leitungsabschnitt 2 über eine Gaszuführung 9 und ein schaltbares Ventil VM4 mit der gaszuführenden Leitung 1 in Verbindung. Zwischen dem Magnetventil VM4
und dem Leitungsabschnitt 2 ist ein Druckminderer VD in
der Gaszuführung 9 vorgesehen, der den in der gaszuführenden Leitung 1 anstehenden Druck um vorzugsweise die Hälfte
vermindert.

TN 0103 0027/01
(F 360 1)
20 000 2.84 pg

Zwischen dem Druckminderer VD und dem Leitungsabschnitt 2 ist über ein Anschlußstück 9a eine Drucküberwachungsvorrichtung M angeschlossen, mit der z.B. über ein Manometer 8 der im Leitungsabschnitt 2 herrschende Druck überwachbar ist. Vorzugsweise ist in der Druckanzeigevorrichtung M eine Schaltvorrichtung integriert, die im wesentlichen aus einer Kontaktzunge 10 und zwei Kontakten 11 und 12 besteht. Die Schaltvorrichtung ist so ausgelegt, daß ab oberhalb eines bestimmten ersten Druckwerts 16 die Kontaktzunge 10 am Kontakt 11 anliegt und unterhalb eines zweiten Druckwerts 17 die Kontaktzunge am Kontakt 12 anliegt. Liegt der Druck im Leitungsabschnitt 2 zwischen diesen beiden Druckwerten 16 und 17, so liegt die Kontaktzunge 10 in einer Stellung zwischen den beiden Kontakten 11 und 12, ohne eine elektrische Verbindung herzustellen.

Das Magnetventil VM4, der Druckminderer VD und Drucküberwachungsvorrichtung M mit der integrierten Schaltvorrichtung 10, 11, 12 bilden vorteilhaft eine Baueinheit 14, die leicht auswechselbar ist und leicht an bestehenden Anlagen nachgerüstet werden kann.

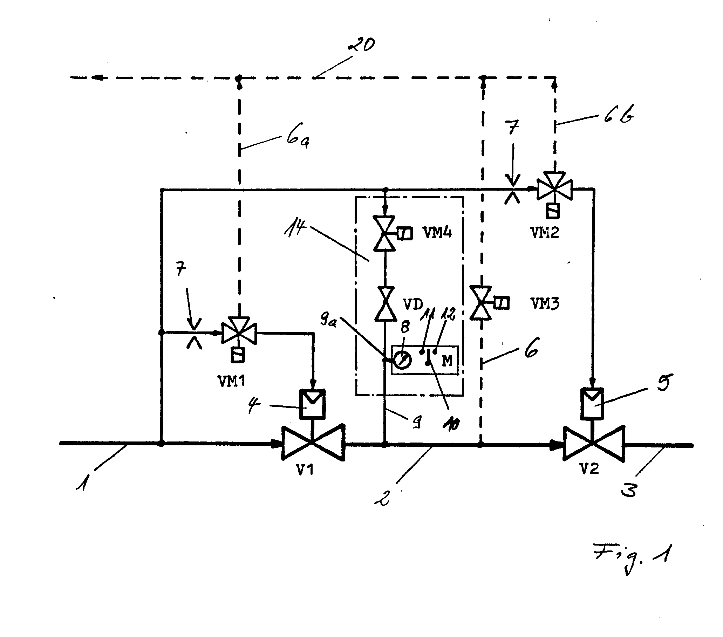

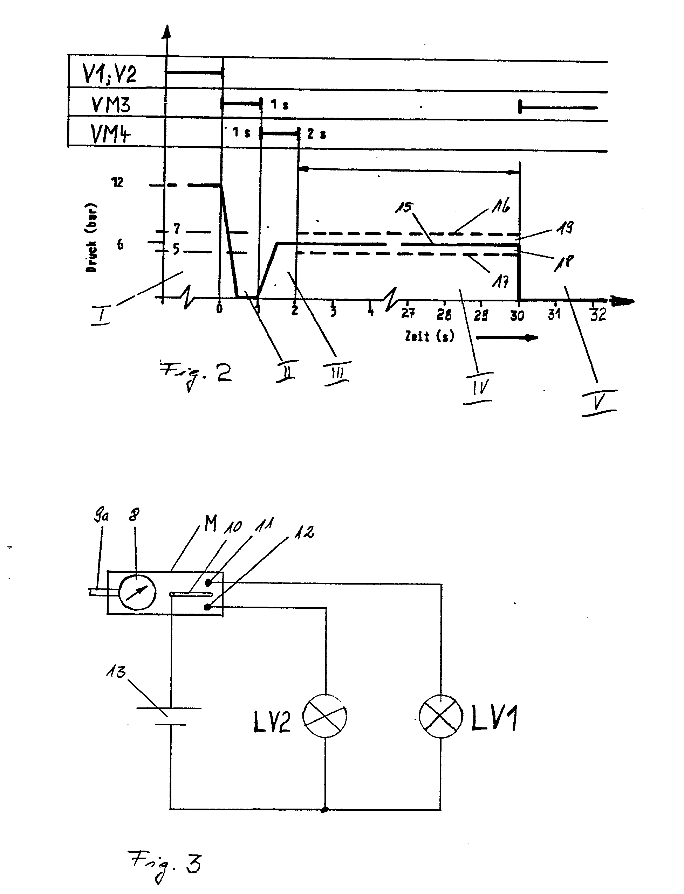

Die beschriebene Vorrichtung zur Dichtigkeitsprüfung zweier Absperrventile wird wie folgt betrieben. Die Magnetventile VM1 und VM2 werden durch Abschalten des Erregerstroms entregt, wodurch die Gaszuführung zu den Stellzylindern 4 und 5 geschlossen und diese mit den Entlüftungsleitungen 6a und 6b verbunden werden. Die Stellzylinder 4 und 5 fahren in ihren Ausgangslagen zurück, wodurch die Ventile V1 und V2 schließen. Der Übergang vom offenen Zustand der Ventile V1 und V2 zu deren geschlossenen Zustand am Ende des Felds I in Fig. 2 ist zur Zeitmarke t = 0 erreicht.

TN 0103 0027/01
(F 360/1)
20 000 2.84 pg

Nunmehr wird durch Erregung des Magnetventils VM3 die Entlüftungsleitung 6 geöffnet, so daß sich der Druck im Leitungsabschnitt 2 vollständig abbauen kann. Hierbei ist die Öffnungsdauer den Magnetventils VM3 so bestimmt, daß etwa bereits nach der Hälfte der Öffnungsdauer der Druckabfall auf 0 bar erfolgt ist. Die Entlüftungsphase ist im Feld II in Fig. 2 dargestellt und dauert bis zur Zeitmarke t = 1 Sekunde.

Zur Zeitmarke t = 1 Sekunde wird das Magnetventil VM4 geöffnet, so daß sich über den Druckminderer VD ein Druck im Leitungsabschnitt 2 aufbauen kann, der kleiner als der Druck in der gaszuführenden Leitung 1 und größer als der Druck in der gasabführenden Leitung 3 ist. Dieser vorgebbare Druckwert 15 im Leitungsabschnitt 2 ist vorzugweise halb so groß wie der in der gaszuführenden Leitung 1 anstehende Druck. Die Druckbeaufschlagung des Leitungsabschnitts 2 ist im Feld III in Fig. 2 dargestellt und dauert bis zur Zeitmarke t = 2 Sekunden. Ausgehend von einem Druck von 12 bar in der gaszuführenden Leitung 1 wird mittels des Druckminderers VD im Leitungsabschnitt 2 der vorgebbare Druckwert 15 von 6 bar eingestellt.

Zur Zeitmarke t = 2 Sekunden schließt das Magnetventil VM4. Die Leitungsabschnitt bleibt nun während einer vorgebbaren Zeitspanne, vorzugsweise für 15 bis 30 Sekunden von der Entlüftungsleitung 6 und der Gaszuführung 9 gasdicht abgesperrt.

Über die Drucküberwachungsvorrichtung M wird während dieser Zeitspanne das Druckverhalten im Leitungsabschnitt 2 überwacht. Dieser Zeitraum der Überwachung ist in Feld IV in Fig. 2 dargestellt. Sinkt der Druck um einen vorgebbaren Differenzdruck 18 unter den vorgegebenen Druckwert 15 von 6 bar, so legt sich die Kontaktzunge 10 an den Kontakt 12 an und schließt den Stromkreis einer Leckanzeigelampe LV2 (Fig. 3), die von einer Spannungquelle 13 gespeist wird. Die Leckanzeige LV2 zeigt an, daß über das Absperrventil V2 (und/oder über das Magnetventil VM3) Gas aus dem Leitungsabschnitt 2 abströmen kann. Steigt hingegen der Druckwert um einen vorgebbaren Differenzdruck 19 über den vorgegebenen Druckwert 15 von 6 bar an, so legt sich die Kontaktzunge 10 an den Kontakt 11 an un schließt den Stromkreis der Leckanzeigt LV1, die ebenfalls von der Spannungsquelle 13 gespeist ist (Fig. 3). Die Leckanzeige LV1 zeigt die Undichtigkeit des Ventils V1 an.

In vorliegendem Ausführungsbeispiel ist ein zulässiger Differenzdruck 18, 19 von +- 1 bar um den vorgebbaren Druckwert 15 von 6 bar zugelassen. Die Schaltvorrichtung 10, 11, 12 schließt den ersten Kontakt unterhalb der Druckschwelle von 5 bar und schließt den zweiten Kontakt oberhalb der Druckschwelle von 7 bar. Es kann zweckmäßig sein, die zulässigen Abweichungen geringer oder auch größer vorzusehen. Verharrt der Druck innerhalb der durch die Differenzdrücke 18 und 19 um den vorgebbaren Druckwert 15 definierten Bereich, so liegt die Kontaktzunge 10 zwischen den Kontakten 11 und 12 und die Leckanzeige LV1 bzw. LV2 wird nicht aktiviert.

Nach Ablauf der Zeitspanne für die Dichtigkeitsprüfung, z.B. zur Zeitmarke t = 30 Sekunden, wird das Magnetventil VM3 in der Entlüftungsleitung 6 geöffnet und der Leitungsabschnitt 2 bis zur erneuten Inbetriebnahme der Gasleitung entlüftet.

0184836

Es ist vorteilhaft, das erfindungsgemäße Verfahren zur Dichtigkeitsprüfung der Absperrventile V1 und V2 nach Absperren der Ventile sowie vor einem Öffnen der Ventile durchzuführen. Auf diese Weise wird ein höchstmöglicher Grad an Sicherheit erzielt.

Das Verfahren sowie die Vorrichtung ist für alle Anlagen geeignet, in denen unter Druck stehende, gasförmige Medien durch absperrbare Rohrleitungen transportiert werden. Vorteilhaft ist das erfindungsgemäße Verfahren sowie die zur Durchführung vorgesehene Vorrichtung in der Gaszuführung zu Gasturbinenanlagen anwendbar.

Klöckner-Humboldt-Deutz AG  **KHD**

5000 Köln 80, den  1. Dezember 1985
D 84/066    AE-ZPB Wa/Hö

P a t e n t a n s p r ü c h e

1.    Verfahren zur Dichtigkeitsprüfung zweier Absperrventile (V1, V2) in einer gasdurchströmten Leitung, wobei
nach Absperren der Ventile (V1, V2) der Druck in dem Leitungsabschnitt (2) zwischen den Ventilen (V1, V2) überwacht wird,
dadurch gekennzeichnet, daß nach dem Absperren der Ventile
(V1, V2) der Druck in dem Leitungsabschnitt (2) zwischen
den Ventilen auf einen vorgebbaren Druckwert (15) zwischen
dem Druck in der gaszuführenden Leitung (1) und dem Druck
in der gasabführenden Leitung (2) gesenkt und der vorgebbare Druckwert (15) überwacht wird.

2.    Verfahren nach Anspruch 1,
dadurch gekennzeichnet, daß der Leitungsabschnitt (2)
zwischen den Ventilen (V1, V2) zunächst entlüftet und dann
auf einen vorgebbaren Druckwert (15) aus der gaszuführenden Leitung (1) gasbeaufschlagt wird.

3.    Verfahren nach Anspruch 1 oder 2,
dadurch gekennzeichnet, daß bei Abfall des Drucks unter
einen Differenzdruck (18) unter den vorgebbaren Druckwert
(15) eine Leckanzeige (LV2) für das Ventil (V2) der gasabführenden Leitung (3) und bei Ansteigen des Drucks über
einen Differenzdruck (19) über den vorgebbaren Druckwert
(15) eine Leckanzeige (LV1) für das Ventil (V1) der gaszuführenden Leitung (1) angesteuert wird.

4.    Verfahren nach einem der Ansprüche 1 bis 3,
dadurch gekennzeichnet, daß nach einer Prüfzeit (IV) von
ca. 15 bis 30 Sekunden der Leitungsabschnitt (2) entlüftet
wird.

5.    Verfahren nach einem der Ansprüche 1 bis 4,
dadurch gekennzeichnet, daß die Dichtigkeitsprüfung der
Ventile (V1, V2) sowohl nach dem Absperren wie vor dem
Öffnen der Ventile (V1, V2) erfolgt.

6.    Vorrichtung zur Durchführung des Verfahrens nach
Anspruch 1, mit mindestens einem zwischen der gaszuführenden und der gasabführenden Leitung (1, 3) angeordneten
Leitungsabschnitt (2), der von mindestens zwei Ventilen
(V1, V2) absperrbar ist und mit einer schaltbaren Entlüftungsleitung (6) sowie mit einer Drucküberwachungsvorrichtung (M) in Verbindung steht,
dadurch gekennzeichnet, daß der Leitungsabschnitt (2) unter Umgehung des Ventils (V1) der gaszuführenden Leitung
(1) über eine steuerbare Gaszuführung (9) mit der gaszuführenden Leitung (1) in Verbindung steht und eine druckabhängige Schaltvorrichtung (10, 11, 12) aufweist, die
oberhalb eines ersten Druckwertes (16) einen ersten und
unterhalb eines zweiten Druckwerts (17) einen zweiten Kontakt (11, 12) schließt und bei einem Druck zwischen den
Druckwerten (16, 17) beide Kontakte (11, 12) geöffnet hält.

7.    Vorrichtung nach Anspruch 6,
dadurch gekennzeichnet, daß in der Gaszuführung (9) ein
Druckminderer (VD) angeordnet ist.

8.    Vorrichtung nach Anspruch 7,
dadurch gekennzeichnet, daß der Druckminderer (VD) den in
der gaszuführenden Leitung (1) anstehenden Druck halbiert.

TN 0103 0027/01
(F 360 1)
20 000 2 84 pg

Klöckner-Humboldt-Deutz AG △KHD

1.12.1985
D 84/066

9.     Vorrichtung nach einem der Ansprüche 6 bis 8, dadurch gekennzeichnet, daß die Schaltvorrichtung (10, 11, 12) in die Drucküberwachungsvorrichtung (M) integriert ist.

10.     Vorrichtung nach einem der Ansprüche 6 bis 9, dadurch gekennzeichnet, daß ein in der Gaszuführung (9) angeordnetes Ventil (VM4), insbesondere ein Magnetventil, der Druckminderer (VD), die Drucküberwachungsvorrichtung (M) und die Schaltvorrichtung (10, 11, 12) eine Baueinheit (14) bilden.

Fig. 1

0184836

Fig. 2

Fig. 3

K H D  AG , Köln                    D 84/66